# FASCICULE DE BREVET EUROPEEN

(11) **EP 1 528 409 B1**
(45) Date de publication et mention de la délivrance du brevet: **21.06.2006**
(21) Numéro de dépôt: 04292370.6
(22) Date de dépôt: 06.10.2004
(51) Int. Cl.: G01S 13/86, G01S 13/92, G01S 13/91

(54) **Procédé et dispositif de mesure de la vitesse d'un véhicule en déplacement sur une trajectoire courbe déterminée**
Verfahren und Vorrichtung für Geschwindigkeitsmessung eines Fahrzeugs, das sich auf einem bestimmten Kurvenverlauf befindet
Method and system for measuring the speed of a vehicle on a curved trajectory

(30) Priorité: 27.10.2003 FR 0312529
(43) Date de publication de la demande: 04.05.2005
(73) Titulaire: SAGEM Défense Sécurité, 75015 Paris (FR)
(72) Inventeur: Lavoipierre, Georges, 78630 Orgeval (FR)
(74) Mandataire: Gorrée, Jean-Michel

(56) Documents cités:
- EP-A- 0 621 573
- EP-A- 0 933 648
- FR-A- 2 620 535

## Description

La présente invention concerne le domaine de la mesure des conditions de circulation d'un véhicule en déplacement sur une route, ou analogue.

Les conditions de circulation d'un véhicule sont l'ensemble des paramètres de circulation régis par le code de la route et pouvant de ce fait être contrôlés en référence à des valeurs légales définies pour ces paramètres. Il s'agit par exemple de la vitesse d'un véhicule, de l'interdistance entre véhicules successifs, etc.

Les techniques pour effectuer automatiquement de telles mesures, notamment de vitesse, sont nombreuses et variées. Elles mettent en oeuvre généralement un dispositif nommé radar.

Dans les systèmes actuels, le radar situé au bord de la route ou en hauteur, mesure la projection de la vitesse du véhicule sur son axe de visée. Le radar, par exemple à effet Doppler ou laser, est en général disposé en bordure de route de manière à ce que l'angle entre le vecteur vitesse du véhicule et l'axe de visée soit de l'ordre de 20 à 25 degrés. Cet angle s'appelle l'angle basique.

En général, lorsqu'une infraction est constatée, un appareil photo est déclenché pour procurer une image du véhicule permettant de lire la plaque d'immatriculation et de voir le visage du conducteur.

Le document EP-A-621 573, entre autres, décrit un procédé et un dispositif de mesure de vitesse d'un véhicule en déplacement sur une route.

Les techniques actuelles présentent cependant l'inconvénient de permettre des mesures de conditions de circulation, de vitesse notamment, qui sont fiables uniquement sur des lignes droites, et non sur des zones de virage. Les mesures en virage qu'elles fourniraient ne seraient exploitables que dans le cas où seule une seule voie de circulation ferait partie de la zone de détection du radar, ce qui ne serait pas rentable.

Or les zones de virages sont des endroits aussi propices aux accidents, voire même plus, que les lignes droites.

Par ailleurs, la systématisation des contrôles conduit à la généralisation de l'automatisation des systèmes de contrôle des conditions de circulation. Les mesures doivent donc pouvoir s'effectuer à grande échelle, notamment à partir d'un même dispositif sur plusieurs voies à la fois, et sur des lignes droites aussi bien qu'en virage.

La présente invention vise à proposer une solution permettant de réaliser des mesures de conditions de circulation, et notamment de la vitesse aptes à donner satisfaction en présence des contraintes citées ci-dessus.

Ainsi suivant un premier aspect, l'invention propose un procédé de mesure de la vitesse d'un véhicule en déplacement sur une trajectoire déterminée. La vitesse du véhicule est mesurée au moins lors du franchissement par le véhicule d'un axe de visée traversant ladite trajectoire. Le procédé selon l'invention comprend les étapes suivantes :
a) dans une étape préalable d'étalonnage, une correspondance est établie entre chaque position le long de l'axe de visée et dans la trajectoire, et une valeur d'angle basique correspondante, ladite valeur d'angle basique correspondante étant égale à l'angle entre l'axe de visée et le vecteur vitesse d'un véhicule en déplacement sur la trajectoire déterminée et franchissant l'axe de visée en un point correspondant à ladite position, puis,
b) dans une étape de mesure :
   - la position d'un véhicule le long de l'axe de visée est déterminée ;
   - la composante de vitesse du véhicule selon l'axe de visée est mesurée ;
   - une valeur d'angle basique correspondante est déduite à partir de la susdite correspondance établie lors de l'étape préalable d'étalonnage ; et,
   - la vitesse réelle du véhicule est calculée en fonction de ladite valeur d'angle basique et ladite composante de vitesse mesurée.

Le procédé selon l'invention, s'il peut toutefois être mis en oeuvre sur des trajectoires correspondant à des routes en ligne droite, est particulièrement utile pour des trajectoires correspondant à des routes présentant des virages.

En particulier ce procédé peut être mis en oeuvre sur un ensemble de voies comprises dans la zone de détection d'un radar.

L'étape préparatoire permet ensuite d'automatiser les calculs de conditions de circulation, et donc de rationaliser les contrôles.

Lorsque la trajectoire comprend plusieurs voies de circulation, ces voies pouvant correspondre à un même sens de circulation ou non, la valeur d'angle peut être prise constante pour l'ensemble des coordonnées le long de l'axe de visée à l'intérieur d'une même voie. Cette disposition offre l'avantage de simplifier d'autant plus le traitement aboutissant à la mesure de vitesse.

En cas d'infraction constatée, au moins une image du véhicule est capturée selon des paramètres de captures d'images définis, au moins un de ces paramètres de capture d'image étant adapté en fonction de la position du véhicule déterminée et éventuellement de sa vitesse calculée. Et l'image capturée peut être ensuite associée au constat d'infraction.

Suivant un deuxième aspect, l'invention propose un dispositif de mesure de la vitesse d'un véhicule en déplacement sur une trajectoire déterminée, la vitesse dudit véhicule étant mesurée au moins lors du franchissement par le véhicule d'un axe de visée traversant ladite trajectoire.

Le dispositif selon l'invention comprend :
- des moyens de correspondance tenant en mémoire une correspondance entre chaque position le long de l'axe de visée et une valeur d'angle basique correspondante, ladite valeur d'angle basique correspondante étant égale à l'angle entre l'axe de visée et le vecteur vitesse d'un véhicule en déplacement sur la trajectoire déterminée et franchissant l'axe de visée en un point correspondant à ladite position,
- des moyens de détermination de position propres à déterminer la position dudit véhicule le long de l'axe de visée ;
- des moyens de mesure de la composante de vitesse du véhicule selon l'axe de visée ;
- des moyens de déduction propres à déduire la valeur d'angle basique dans les susdits moyens de correspondance d'après la position déterminée sur l'axe ;
- des moyens de calcul propres à calculer la vitesse du véhicule en fonction de ladite valeur d'angle basique et ladite valeur de la composante de vitesse mesurée selon l'axe de visée.

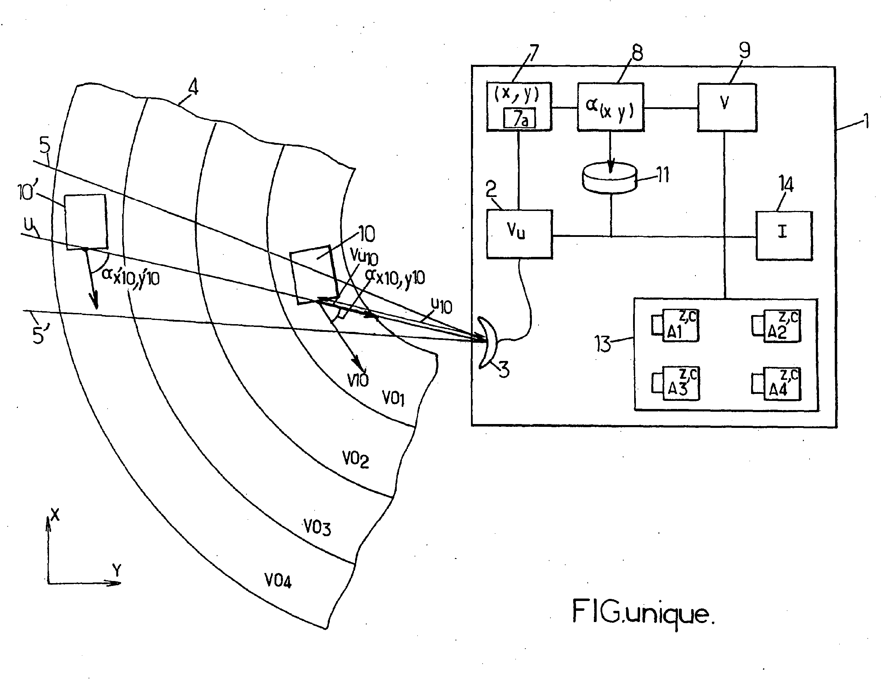

D'autres caractéristiques et avantages de l'invention apparaîtront encore à la lecture de la description qui va suivre. Celle-ci est purement illustrative et doit être lue en regard des dessins annexés sur lesquels :
- la figure unique est un schéma de principe d'un dispositif dans un mode de réalisation de l'invention.

Sur la figure unique est représenté un dispositif 1 agencé selon l'invention. Selon l'invention, ce dispositif 1 comprend un radar 2, comportant une antenne radar 3 installée au bord d'une route 4. Le radar 2 est associé à un champ de détection de largeur d'environ 5 degrés correspondant à un faisceau d'ondes émises par l'antenne 3 et délimité par un rayon amont 5 et un rayon aval 5'. Un axe de visée U du radar 2 passant par l'antenne 3 figure dans le champ de détection. L'axe U est encore appelé axe sensible du radar 2. Les mesures sont effectuées par le radar 2 le long de cet axe U.

La route 4 comporte quatre voies VO1, VO2, VO3 et VO4.

La partie de la route 4 couverte par le faisceau du radar 2 est en courbe.

Le dispositif 1 selon l'invention comporte un module de position 7 adapté pour détecter un véhicule franchissant l'axe de visée U et fournir la coordonnée (x,y) de ce véhicule au point de franchissement de l'axe U, dans un référentiel (X,Y) prédéfini.

Le radar 2 est par exemple un radar à effet Doppler, bien connu et décrit par exemple dans le document FR-A-2 620 535. Un tel radar est adapté pour détecter un véhicule pénétrant dans son champ de détection et pour mesurer la projection Vᵤ sur son axe sensible U, du vecteur de vitesse V, de norme V, d'un véhicule lors de la traversée de cet axe, à partir de la différence de fréquence entre le faisceau transmis par l'antenne 3 et le faisceau reçu par cette même antenne.

Le module de position 7 peut être un télémètre, par exemple un dispositif optique, à infrarouge ou laser, situé au même endroit que le radar 2 et dont l'axe de détection correspond à l'axe de visée U, adapté pour calculer une distance en analysant des rayons reçus en fonction de rayons émis.

Dans une réalisation particulière de l'invention, le radar 2 est un radar à effet Doppler bifréquence (décrit par exemple dans le document EP-A-933 648). Par rapport à un radar à effet Doppler monofréquence, un tel radar émet à partir de son antenne 3 des signaux à deux fréquences différentes. Il calcule la vitesse de la même façon qu'un radar à effet Doppler monofréquence. Il peut calculer en outre la distance u séparant le radar 2, du véhicule sur l'axe de visée du radar U. Cette distance est calculée en fonction de la différence de phase entre le signal réfléchi correspondant à la première fréquence émise et le signal réfléchi correspondant à la seconde fréquence émise. Ainsi, dans un tel mode de réalisation, le module de position 7 est au moins en partie intégré au radar 2. Il mesure à la fois la valeur Vᵤ de la vitesse, la distance u sur l'axe U. Il déduit de la distance u et de la connaissance de l'axe U, les coordonnées (x,y) du véhicule franchissant l'axe, U dans le référentiel prédéfini (X,Y).

Le dispositif selon l'invention 1 comporte en outre un module de détermination d'angle 8 qui fournit, pour toutes coordonnées (x,y) d'un point situé sur l'axe U déterminée par le module de position 7, une valeur d'angle α_{(x,y)} en sortie.

Cette valeur d'angle α_{(x,y)} est une estimation représentative de l'angle existant entre l'axe de visée U du radar 2 et le vecteur vitesse V d'un véhicule en déplacement standard sur la route (le vecteur vitesse V étant tangent à la trajectoire correspondant au déplacement standard) et passant sur le point de coordonnées (x,y) de l'axe U.

Le module de détermination d'angle 8 peut avoir été paramétré dans une étape préalable, à l'aide par exemple d'un nombre limité de valeurs d'angle An mesurées en des points particuliers Pn de coordonnées (xₙ,yₙ) le long de l'axe U.

Ces points Pn peuvent par exemple être répartis le long de l'axe U, un pas de 1 mètre séparant deux points Pn successifs. Un opérateur relève ou estime au cours de l'étape préalable, en chacun de ces points Pn, l'angle entre l'axe de visée U du radar 2 et le vecteur vitesse d'un véhicule en déplacement standard sur la route (le vecteur vitesse étant tangent à la trajectoire correspondant au déplacement standard) et passant par Pn. On peut entendre par déplacement standard un déplacement suivant la forme générale de la voie en ce point.

Le module de détermination d'angle 8 peut ensuite fournir à partir de ce nombre fini de valeurs d'angle, une valeur d'angle en chaque point (x,y) de l'axe U, par interpolation par exemple sur les valeurs d'angle An correspondant à Pn.

Dans une autre réalisation, un angle unique peut être calculé par voie sur l'axe U, par exemple en moyennant l'ensemble des valeurs d'angles An déterminées par l'opérateur pour les points Pn de chaque voie. Et le module 8 peut ensuite affecter à des coordonnées (x,y) d'un point sur l'axe U fournies en entrée la valeur moyenne calculée pour la voie à laquelle correspond les coordonnées (x,y). Dans ce cas, dans l'étape préalable, l'opérateur, par exemple à l'aide de relevés métriques, aura également réalisé une répartition de l'axe U selon les voies. Ainsi la partie de l'axe U dans une voie VOi_{|i=1,2,3,4} y est définie comme l'ensemble des points sur l'axe U dont les coordonnées (x,y) sont comprises dans des plages de coordonnées respectives.

Cet angle peut dans une autre méthode de réalisation de l'invention être fourni automatiquement à partir d'un profil de routes introduit préalablement par l'opérateur.

Dans un mode de réalisation, le dispositif 1 comporte en outre une mémoire 11 dans laquelle est stockée cette répartition des voies sur l'axe U.

Le dispositif selon l'invention 1 comprend en outre un module 9 de calcul de la vitesse V d'un véhicule, à partir de la valeur de la projection Vᵤ sur l'axe U de la vitesse V du véhicule, calculée par le radar 2 et de la valeur α_{(x,y)} fournie par le module 8. V est égale à Vᵤ / cos α_{(x,y)}.

Le dispositif selon l'invention 1 comporte en outre un module de prises de vues 13 disposé le long des voies de manière à prendre des photos d'un véhicule peu après le franchissement de l'axe U faisant apparaître au moins la plaque d'immatriculation du véhicule. En cas d'infraction, la ou les photos prises d'un véhicule sont associées au constat d'infraction établi relatif au véhicule.

A partir du dispositif 1 présenté, une mesure est effectuée comme décrit ci-dessous.

Les ondes réfléchies par un véhicule 10 circulant sur la voie VO1 de la route 4 sont captées par l'antenne 3 dès que le véhicule entre dans le champ de détection du radar 2 et franchit un des rayons amont ou aval (les voies correspondent éventuellement à des sens de circulation différents). Les ondes réfléchies lors du franchissement de l'axe U par le véhicule sont analysées par le radar 2, qui calcule la projection Vᵤ₁₀ de la vitesse du véhicule 10 sur l'axe U.

En parallèle, le module de position 7 détermine la position (x₁₀,y₁₀) du véhicule 10 le long de l'axe U (dans le cas d'un radar bifréquence, à l'aide de la distance u₁₀ entre le radar 2 et le véhicule 10). Cette position est ensuite fournie comme donnée d'entrée au module de détermination d'angle 8 , qui délivre en sortie un angle α _{x10,y10}.

Les valeurs de la projection de la vitesse Vᵤ₁₀ et de l'angle α _{x10,y10} sont ensuite fournies au module 9 de calcul de vitesse, qui détermine la norme V₁₀ du vecteur vitesse V₁₀ du véhicule 10.

Au cas où la vitesse V₁₀ est supérieure à un seuil déterminé, un signal est transmis au module de prise de vues 13 et une photo du véhicule est prise.

Dans un mode de réalisation de l'invention, le module de position 7 peut comporter un sous-module 7a adapté pour calculer la distance d entre le point de détection du véhicule (x,y) et le module de prise de vues 13, dont les coordonnées dans le référentiel (X,Y) auront été préalablement entrées. Le cadrage C ou le zoom Z utilisé pour la prise de photos peut être adapté par le module de prise de vues 13 en fonction de cette distance d calculée par le module 7. Au moment de prise de photo, la distance effective entre le véhicule et le module 13 peut être mise à jour, à partir du temps écoulé depuis la détection, et de la vitesse V calculée pour le véhicule par me module 9.

Dans un mode de réalisation de l'invention, le module de prise de vues 13 peut comporter plusieurs appareils photos A₁,A₂,A₃,A₄, chacun avec une ligne de visée adaptée pour une voie spécifique VO1, VO2, VO3, VO4. Suivant la voie sur laquelle le véhicule a été détecté (déterminée par comparaison de la position (x,y) déterminée avec la répartition des voies selon l'axe U effectuée dans l'étape préalable), un appareil photographique particulier sera activé par le module de prise de vues 13. Et dans ce cas, les paramètres de cadrage et de zoom pour chaque appareil photo peuvent être en outre adaptées en fonction de la position (x,y) déterminée.

La vitesse V_{10'} sera calculée de même pour un véhicule 10' franchissant l'axe U sur la voie VO4.

L'angle α_{x10, y10'} fourni par le module de détermination d'angle 8 dans le cas représenté en figure unique est alors supérieur à l'angle α_{x10,y10}. Les variations entre angles peuvent atteindre environ 10 degrés, dans une courbe classique.

Dans un mode de réalisation de l'invention, le radar 2 et le module de position 7 (par exemple au moins partiellement au sein d'un même radar bifréquence), sont adaptés pour réaliser des mesures le long de plusieurs axes de visée U situés à l'intérieur du champ de détection délimité par les rayons amont et aval 5 et 5'.

Dans ce cas, le module de détermination d'angle est adapté pour fournir au moins pour les coordonnées (x,y) des points constituant les différents axes de visée Uᵢ et dans la trajectoire, si ce n'est pour toutes les coordonnées (x,y) de la trajectoire, un angle α_{(x,y)}. Et la mémoire 11 comporte une partition des coordonnées (x,y) selon les quatre voies, effectuée préalablement par exemple à partir de la sélection d'un profil de route déterminé par l'opérateur.

Ainsi la vitesse Vᵢ d'une voiture en déplacement sur la trajectoire sera calculée à plusieurs reprises, le long de différents axes Uᵢ de visée depuis le radar 2. Pour chaque axe Uᵢ, le calcul se déroule comme indiqué précédemment en référence à la figure unique.

Une vitesse moyenne V est ensuite calculée par moyennage des différentes vitesses Vᵢ déterminées.

Dans un mode de réalisation, le dispositif 1 selon l'invention peut en outre comporter un module 14 d'interdistance adapté pour calculer l'interdistance entre deux véhicules successifs.

Le module 14 calcule l'interdistance I entre deux véhicules détectés successivement dans le champ de détection (une infraction de type interdistance peut être commise par un véhicule par rapport au véhicule le précédant) en vérifiant tout d'abord que les véhicules sont situés sur la même voie (à partir de la répartition des voies enregistrée). Si c'est bien le cas, le module 14 calcule l'interdistance en fonction de la vitesse V calculée pour le premier véhicule détectée et du temps écoulé entre les deux détections. Dans le cas où le dispositif opère sur plusieurs axes de visée Uᵢ, le calcul peut prendre en compte en outre des vitesses calculées sur différents axes de visée relatives aux véhicules, les temps séparant chaque détection et les positions associées.

Puis le module 14 compare cette interdistance I calculée avec une valeur légale prédéfinie. Au cas où une infraction est constatée, un signal est envoyé au dispositif de prises de vue 13, qui de la même façon que précédemment, peut sélectionner un appareil photo en fonction de la position des véhicules, ou de la voie de circulation des véhicules, et qui peut en outre adapter le cadrage en fonction de la distance à ces véhicules. La photo obtenue est ensuite associée au constat d'infraction.

Ainsi un dispositif et un procédé selon l'invention permet le calcul de conditions de circulation sur plusieurs voies, même en virage. Il permet une grande automatisation du traitement. Il peut permettre en outre l'établissement d'un constat d'infraction efficace, en adaptant notamment les conditions de prises de photos à la situation du véhicule sur la trajectoire.

## Revendications

1. Procédé de mesure de la vitesse (V) d'un véhicule (10) en déplacement sur une trajectoire déterminée (4), la vitesse dudit véhicule étant mesurée au moins lors du franchissement par le véhicule d'un axe de visée (U) traversant ladite trajectoire, **caractérisé en ce que** :
a) dans une étape préalable d'étalonnage, une correspondance est établie entre chaque position (x,y) le long de l'axe de visée (U) et dans la trajectoire, et une valeur d'angle basique correspondante (α_{x,y}), ladite valeur d'angle basique correspondante étant égale à l'angle entre l'axe de visée et le vecteur vitesse d'un véhicule en déplacement sur la trajectoire déterminée et franchissant l'axe de visée en un point correspondant à ladite position, puis,
b) dans une étape de mesure :
- la position (x,y) d'un véhicule le long de l'axe de visée est déterminée ;
- la composante de vitesse (Vu) du véhicule selon l'axe de visée est mesurée ;
- une valeur d'angle basique correspondante (α_{x,y}) est déduite à partir de la susdite correspondance établie lors de l'étape préalable d'étalonnage ; et,
- la vitesse réelle du véhicule est calculée en fonction de ladite valeur d'angle basique et ladite composante de vitesse mesurée.

2. Procédé selon la revendication 1, **caractérisé en ce que** la trajectoire comprend plusieurs voies de circulation (VO1, VO2, VO3, VO4), et la valeur d'angle (α_{x,y}) est prise constante quelle que soit la position du véhicule le long de l'axe de visée (U) à l'intérieur d'une même voie.

3. Procédé selon l'une des revendications 1 à 2, selon lequel la distance (I) entre un premier véhicule et un second véhicule est déterminée en fonction d'au moins la vitesse calculée du premier véhicule.

4. Procédé selon l'une des revendications 1 à 3 selon lequel :
- on compare la vitesse calculée avec une vitesse seuil prédéfinie ;
- si la vitesse calculée est supérieure à la vitesse seuil, au moins une image du véhicule est capturée, correspondant à des paramètres de capture d'images définis (Z, C, A₁, A₂, A₃, A₄), au moins un desdits paramètres de capture d'image étant adapté en fonction d'au moins la position du véhicule déterminée.

5. Procédé selon la revendication 3 selon lequel :
- on compare la distance déterminée (I) à une valeur seuil prédéfinie,
- si la distance déterminée est supérieure à la valeur seuil prédéfinie, au moins une image du véhicule est capturée, correspondant à des paramètres de capture d'images définis (Z, C, A₁, A₂, A₃, A₄), au moins un desdits paramètres de capture d'image étant adapté en fonction d'au moins la position du véhicule déterminée.

6. Procédé selon la revendication 4 ou 5, selon lequel un desdits paramètres est adapté en fonction de la vitesse calculée du véhicule.

7. Dispositif (1) de mesure de la vitesse (V) d'un véhicule (10) en déplacement sur une trajectoire déterminée (4), la vitesse dudit véhicule étant mesurée au moins lors du franchissement par le véhicule d'un axe de visée (U) traversant ladite trajectoire, **caractérisé en ce qu'**il comprend :
- des moyens de correspondance (8) tenant en mémoire une correspondance entre chaque position le long de l'axe de visée et une valeur d'angle basique correspondante, ladite valeur d'angle basique correspondante étant égale à l'angle entre l'axe de visée et le vecteur vitesse d'un véhicule en déplacement sur la trajectoire déterminée et franchissant l'axe de visée en un point correspondant à ladite position,
- des moyens (7) de détermination de position propres à déterminer la position (x,y) dudit véhicule le long de l'axe de visée :
- des moyens de mesure de la composante de vitesse (Vᵤ) du véhicule selon l'axe de visée;
- des moyens (8) de déduction propres à déduire la valeur d'angle basique (α_{x,y}) dans les susdits moyens de correspondance d'après la position déterminée sur l'axe ;
- des moyens (9) de calcul propres à calculer la vitesse (V) du véhicule (10) en fonction de ladite valeur d'angle basique et ladite valeur de la composante de vitesse mesurée selon l'axe de visée.

8. Dispositif selon la revendication 7 dans lequel la trajectoire (4) comprend plusieurs voies de circulation (VO1, VO2, VO3, VO4) et les moyens (8) de déduction d'une valeur d'angle fournissent une valeur d'angle constante pour l'ensemble des positions (x,y) du véhicule le long de l'axe de visée (U) à l'intérieur d'une même voie.

9. Dispositif selon l'une quelconque des revendications 7 à 8, comprenant des moyens (14) de détermination propres à déterminer la distance (I) entre un premier véhicule et un second véhicule, en fonction d'au moins la vitesse (V) calculée du premier véhicule.

10. Dispositif selon l'une quelconque des revendications 7 à 9, dans lequel les moyens (7) de détermination de la position (x,y) du véhicule (10) comportent un télémètre.

11. Dispositif selon l'une quelconque des revendications 7 à 10, dans lequel les moyens (7) de détermination de la position (x,y) du véhicule (10) et les moyens de calcul (9) de la composante de vitesse (Vᵤ) du véhicule comportent un radar bi-fréquence commun.

12. Dispositif selon l'une des revendications 7 à 11, comprenant
- des moyens de capture (13), propres à capturer en fonction de paramètres définis (Z, C, A₁, A₂, A₃, A₄), au moins une image du véhicule et
- des moyens de définition (13) aptes à définir au moins un desdits paramètres en fonction d'au moins la position (x,y) du véhicule déterminée.

13. Dispositif selon l'une des revendications 7 à 12, dans lequel les moyens (13) de définition définissent au moins un paramètre en fonction de la vitesse (V) calculée du véhicule.

## Claims

1. Method of measuring the velocity (V) of a vehicle (10) when moving on a determined trajectory (4), the velocity of the said vehicle being measured at least when the vehicle passes through a line of sight (U) crossing the said trajectory, **characterized in that**:
a) in a prior calibration step, a correspondence is established between each position (x,y) along the line of sight (U) and in the trajectory, and a corresponding basic angle value (α_{x,y}), the said corresponding basic angle value being equal to the angle between the line of sight and the velocity vector of a vehicle moving on the determined trajectory and passing through the line of sight at a point corresponding to the said position,
then
b) in a measurement step:
- the position (x,y) of a vehicle along the line of sight is determined;
- the velocity component (Vu) of the vehicle along the line of sight is measured;
- a corresponding basic angle value (α_{x,y}) is deduced from the aforementioned correspondence established during the prior calibration step;
and,
- the real velocity of the vehicle is computed as a function of the said basic angle value and of the said measured velocity component.

2. Method according to Claim 1, **characterized in that** the trajectory comprises several traffic lanes (VO1, VO2, VO3, VO4) and the angle value (α_{x,y}) is taken to be constant irrespective of the position of the vehicle along the line of sight (U) inside one and the same lane.

3. Method according to one of Claims 1 or 2, according to which the distance (I) between a first vehicle and a second vehicle is determined as a function of at least the computed velocity of the first vehicle.

4. Method according to one of Claims 1 to 3 according to which:
- the computed velocity is compared with a predefined threshold velocity;
- if the computed velocity is greater than the threshold velocity, at least one image of the vehicle is captured, corresponding to defined image capture parameters (Z, C, A₁, A₂, A₃, A₄), at least one of the said image capture parameters being adapted according to at least the determined position of the vehicle.

5. Method according to Claim 3, according to which:
- the determined distance (I) is compared with a predefined threshold value,
- if the determined distance is greater than the predefined threshold value, at least one image of the vehicle is captured, corresponding to defined image capture parameters (Z, C, A₁, A₂, A₃, A₄), at least one of the said image capture parameters being adapted according to at least the determined position of the vehicle.

6. Method according to Claim 4 or 5, according to which one of the said parameters is adapted according to the computed velocity of the vehicle.

7. Device (1) for measuring the velocity (V) of a vehicle (10) moving on a determined trajectory (4), the velocity of the said vehicle being measured at least when the vehicle passes through a line of sight (U) crossing the said trajectory, **characterized in that** it comprises:
- correspondence means (8) holding in memory a correspondence between each position along the line of sight and a corresponding basic angle value, the said corresponding basic angle value being equal to the angle between the line of sight and the velocity vector of a vehicle moving on the determined trajectory and passing through the line of sight at a point corresponding to the said position,
- position determination means (7) suitable for determining the position (x,y) of the said vehicle along the line of sight;
- means of measuring the velocity component (Vᵤ) of the vehicle along the line of sight;
- deduction means (8) suitable for deducing the basic angle value (α_{x,y}) in the abovementioned correspondence means according to the determined position on the line;
- computing means (9) suitable for computing the velocity (V) of the vehicle (10) as a function of the said basic angle value and of the said value of the velocity component measured along the line of sight.

8. Device according to Claim 7, in which the trajectory (4) comprises several traffic lanes (VO1, VO2, VO3, VO4) and the means (8) of deducing an angle value supplying a constant angle value for all the positions (x,y) of the vehicle along the line of sight (U) inside one and the same lane.

9. Device according to either one of Claims 7 or 8, comprising determination means (14) suitable for determining the distance (I) between a first vehicle and a second vehicle, according to at least the computed velocity (V) of the first vehicle.

10. Device according to any one of Claims 7 to 9, in which the means (7) of determining the position (x,y) of the vehicle (10) comprise a telemeter.

11. Device according to any one of Claims 7 to 10, in which the means (7) of determining the position (x,y) of the vehicle (10) and the means (9) of computing the velocity component (Vᵤ) of the vehicle comprise a common dual-frequency radar.

12. Device according to one of Claims 7 to 11, comprising
- capture means (13), suitable for capturing, according to defined parameters (Z, C, A₁, A₂, A₃, A₄), at least one image of the vehicle; and
- definition means (13) suitable for defining at least one of the said parameters according to at least the determined position (x,y) of the vehicle.

13. Device according to one of Claims 7 to 12, in which the definition means (13) define at least one parameter according to the computed velocity (V) of the vehicle.

## Patentansprüche

1. Verfahren zur Messung der Geschwindigkeit (V) eines sich auf einer bestimmten Bahn (4) bewegenden Fahrzeugs (10), wobei die Geschwindigkeit des Fahrzeugs mindestens beim Überfahren einer die Bahn durchquerenden Zielachse (U) durch das Fahrzeug gemessen wird, **dadurch gekennzeichnet, dass**:
a) in einem vorhergehenden Schritt der Kalibrierung eine Entsprechung zwischen jeder Position (x,y) entlang der Zielachse (U) und in der Bahn und einem entsprechenden Basiswinkelwert (α_{x,y}) hergestellt wird, wobei der entsprechende Basiswinkelwert gleich dem Winkel zwischen der Zielachse und dem Geschwindigkeitsvektor eines sich auf der bestimmten Bahn bewegenden und die Zielachse an einem der Position entsprechenden Punkt überfahrenden Fahrzeugs ist,
dann
b) in einem Messschritt:
- die Position (x,y) eines Fahrzeugs entlang der Zielachse bestimmt wird;
- die Geschwindigkeitskomponente (Vᵤ) des Fahrzeugs in Richtung der Zielachse gemessen wird;
- ein entsprechender Basiswinkelwert (α_{x,y}) ausgehend von der im vorhergehenden Schritt der Kalibrierung hergestellten Entsprechung abgeleitet wird; und
- die tatsächliche Geschwindigkeit des Fahrzeugs in Abhängigkeit vom Basiswinkelwert und von der gemessenen Geschwindigkeitskomponente berechnet wird.

2. Verfahren nach Anspruch 1, **dadurch gekennzeichnet, dass** die Bahn mehrere Fahrspuren (VO1, VO2, VO3, VO4) aufweist und der Winkelwert (α_{x,y}) als konstant angenommen wird, unabhängig von der Position des Fahrzeugs entlang der Zielachse (U) innerhalb der gleichen Spur.

3. Verfahren nach einem der Ansprüche 1 bis 2, gemäß dem die Entfernung (I) zwischen einem ersten Fahrzeug und einem zweiten Fahrzeug in Abhängigkeit von mindestens der berechneten Geschwindigkeit des ersten Fahrzeugs bestimmt wird.

4. Verfahren nach einem der Ansprüche 1 bis 3, gemäß dem:
- die berechnete Geschwindigkeit mit einer vordefinierten Schwellengeschwindigkeit verglichen wird;
- wenn die berechnete Geschwindigkeit höher ist als die Schwellengeschwindigkeit, mindestens ein Bild des Fahrzeugs aufgenommen wird, das definierten Bildaufnahmeparametern (Z, C, A₁, A₂, A₃, A₄) entspricht, wobei mindestens einer der Bildaufnahmeparameter in Abhängigkeit von mindestens der bestimmten Position des Fahrzeugs angepasst wird.

5. Verfahren nach Anspruch 3, gemäß dem:
- die bestimmte Entfernung (I) mit einem vordefinierten Schwellwert verglichen wird,
- wenn die bestimmte Geschwindigkeit höher ist als der vordefinierte Schwellwert, mindestens ein Bild des Fahrzeugs aufgenommen wird, das definierten Bildaufnahmeparametern (Z, C, A₁, A₂, A₃, A₄) entspricht, wobei mindestens einer der Bildaufnahmeparameter in Abhängigkeit von mindestens der bestimmten Position des Fahrzeugs angepasst wird.

6. Verfahren nach Anspruch 4 oder 5, bei dem einer der Parameter in Abhängigkeit von der berechneten Geschwindigkeit des Fahrzeugs angepasst wird.

7. Vorrichtung (1) zur Messung der Geschwindigkeit (V) eines sich auf einer bestimmten Bahn (4) bewegenden Fahrzeugs (10), wobei die Geschwindigkeit des Fahrzeugs mindestens beim Überfahren einer die Bahn durchquerenden Zielachse (U) durch das Fahrzeug gemessen wird, **dadurch gekennzeichnet, dass** sie Folgendes aufweist:
- Entsprechungsmittel (8), die eine Entsprechung zwischen jeder Position entlang der Zielachse und einem entsprechenden Basiswinkelwert gespeichert haben, wobei der entsprechende Basiswinkelwert gleich dem Winkel zwischen der Zielachse und dem Geschwindigkeitsvektor eines sich auf der bestimmten Bahn bewegenden und die Zielachse an einem der Position entsprechenden Punkt überfahrenden Fahrzeugs ist,
- Mittel (7) zur Positionsbestimmung, die geeignet sind, um die Position (x,y) des Fahrzeugs entlang der Zielachse zu bestimmen;
- Mittel zum Messen der Geschwindigkeitskomponente (Vᵤ) des Fahrzeugs gemäß der Zielachse ;
- Ableitungsmittel (8), die geeignet sind, um den Basiswinkelwert (α_{x,y}) in den Entsprechungsmitteln anhand der bestimmten Position auf der Achse abzuleiten;
- Rechenmittel (9), die geeignet sind, um die Geschwindigkeit (V) des Fahrzeugs (10) in Abhängigkeit vom Basiswinkelwert und vom Wert der gemäß der Zielachse gemessenen Geschwindigkeitskomponente zu berechnen.

8. Vorrichtung nach Anspruch 7, bei der die Bahn (4) mehrere Fahrspuren (VO1, VO2, VO3, VO4) aufweist, und die Mittel (8) zur Ableitung eines Winkelwerts einen konstanten Winkelwert für die Gesamtheit der Positionen (x,y) des Fahrzeugs entlang der Zielachse (U) innerhalb der gleichen Spur liefern.

9. Vorrichtung nach einem der Ansprüche 7 bis 8, die Bestimmungsmittel (14) aufweist, die geeignet sind, um die Entfernung (1) zwischen einem ersten Fahrzeug und einem zweiten Fahrzeug in Abhängigkeit von mindestens der berechneten Geschwindigkeit (V) des ersten Fahrzeugs zu bestimmen.

10. Vorrichtung nach einem der Ansprüche 7 bis 9, bei der die Mittel (7) zur Bestimmung der Position (x,y) des Fahrzeugs (10) einen Entfernungsmesser aufweisen.

11. Vorrichtung nach einem der Ansprüche 7 bis 10, bei der die Mittel (7) zur Bestimmung der Position (x,y) des Fahrzeugs (10) und die Mittel (9) zur Berechnung der Geschwindigkeitskomponente (Vᵤ) des Fahrzeugs einen gemeinsamen Zweifrequenz-Radar aufweisen.

12. Vorrichtung nach einem der Ansprüche 7 bis 11, die Folgendes aufweist:
- Aufnahmemittel (13), die geeignet sind, um in Abhängigkeit von definierten Parametern (Z, C, A₁, A₂, A₃, A₄) mindestens ein Bild des Fahrzeugs aufzunehmen, und
- Definitionsmittel (13), die in der Lage sind, mindestens einen der Parameter in Abhängigkeit von mindestens der bestimmten Position (x,y) des Fahrzeugs zu definieren.

13. Vorrichtung nach einem der Ansprüche 7 bis 12, bei der die Definitionsmittel (13) mindestens einen Parameter in Abhängigkeit von der berechneten Geschwindigkeit (V) des Fahrzeugs definieren.
